# EUROPEAN PATENT SPECIFICATION

(11) **EP 3 507 736 B1**
(45) Date of publication and mention of the grant of the patent: **23.07.2025**
(21) Application number: 16760043.6
(22) Date of filing: 30.08.2016
(51) Int. Cl.: G06F 21/52

(54) **METHOD FOR AVOIDING A RETURN ORIENTED PROGRAMMING ATTEMPT ON A COMPUTER AND RESPECTIVE DEVICES**
VERFAHREN ZUR VERMEIDUNG EINES RÜCKSPRUNGORIENTIERTEN PROGRAMMIERVERSUCHS AN EINEM COMPUTER UND ENTSPRECHENDE VORRICHTUNGEN
PROCÉDÉ POUR ÉVITER UNE TENTATIVE DE PROGRAMMATION ORIENTÉE RETOUR SUR UN ORDINATEUR ET DISPOSITIFS CONCERNÉS

(43) Date of publication of application: 10.07.2019
(73) Proprietor: Bayerische Motoren Werke Aktiengesellschaft, 80809 München (DE)
(72) Inventor: PITALE, Mandar, Cupertino, CA 95014 (US)
(86) International application number: PCT/EP2016/070419
(87) International publication number: WO 2018/041342

(56) References cited:
- US-A1- 2004 168 078
- SKOWYRA RICHARD ET AL: "Systematic Analysis of Defenses against Return-Oriented Programming", 23 October 2013, NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 82 - 102, ISBN: 978-3-642-36762-5, ISSN: 0302-9743, XP047043728

## Description

The present invention relates to the field of computer processing devices.

The patent application US 2004/168078 and the non-patent literature XP047043728: "Systematic Analysis of Defenses against Return-Oriented Programming" by Skowyra Richard et a1 are considered relevant prior art. Return-Oriented Programming is a computer hacking technique.

It is a computer security exploit technique that allows an attacker to execute code in the presence of security defences such as non-executable memory and code signing.

In this technique, an attacker gains control of the call stack to hijack program control flow and then executes carefully chosen machine instruction sequences, called gadgets. Each gadget typically ends in a return instruction and is located in a subroutine within the existing program and/or shared library code. Chained together, these gadgets allow an attacker to perform arbitrary operations on a machine employing defences that thwart simpler attacks.

There are some attempts on a software basis, to prevent a return oriented programming for computer systems by defeating return-oriented rootkits like return-less kernels, which uses techniques like return indirection, register allocation and peephole optimization. Those techniques are often slowing down computer systems speed by around 10% to 20%.

As highly automated driving and autonomous driving becomes more and more important in future automobiles, there is a need for data security and intrusion protection, in order to avoid hacking of automobiles. In highly automated and autonomous vehicles the computer system speed is another critical point, as many tasks have to be proceeded in real-time, in order to allow such vehicles a safe driving.

Therefore, there may be a need for computer systems which disallow a return oriented programming, without significant system speed loss and/or which may provide at least one other advantage over the current state of the art.

This need may be met by the subject matter according to the independent claims. Advantageous embodiments of the present invention are described by the dependent claims.

According to a first aspect of the invention there is provided a method for avoiding a return oriented programming attempt on a computer, the method comprising: initial processing of a set of instructions. Therein, the set of instructions comprises a first kind of instructions and a second kind of instructions. And the initial processing of the set of instructions comprises: storing at least a part of each first kind of instruction within the set of instructions into a first computer memory. Storing at least a part of each second kind of instruction within the set of instructions into a second computer memory. Storing a storing reference into the first computer memory, for each stored second kind of instruction within the second computer memory. Therein, each respective storing reference indicates a storing address of each respective stored second kind of instruction within the second computer memory. And locking the second computer memory, for disallowing a write access to the second computer memory, after a termination of the initial processing of the set of instructions.

Some or all steps of the method may be executed in an automated way by means for automatisation such as computer means.

An initial processing according to the invention may be a first execution of a set of instructions after the set of instructions is loaded into a hardware memory and provided for execution.

A set of instructions according to the invention may be for example a computer program for being executed on a computer. In particular the set of instructions is arranged for being executed on an operation system level.

A first kind of instructions according to the invention may comprise the program instructions itself, like procedures, loops, methods, objects and the like.

A second kind of instructions according to the invention may comprise the return addresses of the set of instructions. In particular it may comprise the return addresses of the first kind of instructions.

A locking the second computer memory according to the invention may comprise a locking method, which cannot be bypassed at an operation system level, for example by a software instruction on an operation system level. In particular the locking of the second computer memory cannot by bypassed by any direct software instruction as soon as a locking command has been sent, in order to lock the second computer memory in a way, that it cannot be over-written. In the case the locking of the second computer memory cannot by bypassed by any direct software instruction, the second computer memory can only be transferred into a write-access mode again, by interrupting an electrical power-supply to the second computer memory for a certain period of time. And in this case, for example, an indirect software instruction may lead to a transferring the second computer memory into a write-access mode. Such an indirect software instruction may be an instruction to hardware-reset the second computer memory. In particular, the second computer memory shall loose all its stored information after the lapse of the certain period of time.

This aspect of the invention is based on the idea that it may be advantageous to disallow a re-writing of a certain part of a computer system memory by a software instruction, in order to prevent a manipulation of the memory storing the return addresses of the set of instructions. This may also prevent a significant computer system speed loss.

According to a further aspect of the invention there is provided a computer processing device, comprising: a second computer memory, and a processing unit. Therein, the processing unit comprises: an initial processing means, for initial processing of a set of instructions. Therein, the set of instructions comprises a first kind of instructions and a second kind of instructions. A first storing means, for storing at least a part of each first kind of instruction within the set of instructions into a first computer memory. A second storing means, for storing at least a part of each second kind of instruction within the set of instructions into the second computer memory. A third storing means, for storing a storing reference into the first computer memory, for each stored second kind of instruction within the second computer memory. Therein, each respective storing reference indicates a storing address of each respective stored second kind of instruction within the second computer memory. And a locking means, for locking the second computer memory, for disallowing a write access to the second computer memory, after a termination of the initial processing of the set of instructions. And therein, the computer processing device is adapted for executing a method according to the invention.

This aspect of the invention is based on the idea that it may be advantageous to provide a dedicated hardware, in order to disallow a re-writing of a certain part of a computer system memory by a software instruction, in order to prevent a manipulation of the memory storing the return addresses of the set of instructions.

According to a further aspect of the invention there is provided a computer, comprising
a first computer memory, and
a computer processing device according to the invention.

This aspect of the invention is based on the idea that it may be advantageous to provide a computer system, in order to disallow a re-writing of a certain part of a computer system memory by a software instruction, in order to prevent a manipulation of the memory storing the return addresses of the set of instructions.

According to a further aspect of the invention there is provided a vehicle comprising a computer according to the invention.

This aspect of the invention is based on the idea that it may be advantageous to provide a vehicle with a certain computer system, in order to disallow a re-writing of a certain part of a computer system memory by a software instruction, in order to prevent a manipulation of the memory storing the return addresses of the set of instructions.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

According to a first embodiment of the invention, locking the second computer memory comprises sending a read only allowance command to a control circuit of the second computer memory.

A control circuit according to the invention may an electrical circuit, adapted for controlling the behaviour of a computer memory.

This embodiment of the invention is based on the idea that it may be advantageous to provide a dedicated hardware for controlling the behaviour of the second computer memory. This may increase the processing speed. This may also reduce the production cost. This may lead to a higher reliability of the system. This may further hinder a hacking attempt on the system.

According to a further embodiment of the invention, initial processing of the set of instructions comprises processing each instruction of the set of instructions in a first come first serve modality.

A first come first serve modality according to the invention may comprise processing each instruction after another.

This embodiment of the invention is based on the idea that it may be advantageous to process each step of the set of instructions one after another, in order to increase processing speed, as less other instructions may be needed.

According to a further embodiment of the invention, storing the respective storing reference into the first computer memory is carried out at a time the respective second kind of instruction is processed.

This embodiment of the invention is based on the idea that it may be advantageous to proceed the storing of the respective storing reference as soon as possible, in order to avoid a system speed loss.

According to a further embodiment of the invention, the first computer memory and/or the second computer memory is accessed in a first in first out modality.

This embodiment of the invention is based on the idea that it may be advantageous to provide a memory that may act as a stack for a quick and easy access on its stored information. This may increase the processing speed. This may also reduce the production cost.

According to a further embodiment of the invention, the set of instructions is marked as return oriented programming safe.

Therefore, for example, the method may only be executed, if the set of instructions is marked as return oriented programming safe.

This embodiment of the invention is based on the idea that it may be advantageous to only proceed return oriented programming safe marked computer code in a return oriented programming safe way, as not all computer code may be optimised for such a proceeding and splitting of code respectively instructions.

According to a further embodiment of the invention, initial processing of the set of instructions is carried out on an operating system level.

This embodiment of the invention is based on the idea that it may be advantageous to prevent a return oriented programming hack in particular on an operating system level, as most hacking attacks may occur on such a level. Therefore, this may further hinder a hacking attempt on the system.

According to a further embodiment of the invention, the set of instructions is part of a computer program. Preferably, the set of instructions is part of a compiled computer program.

This embodiment of the invention is based on the idea that it may be advantageous to provide a return oriented program free solution for a complete computer program. This may further hinder a hacking attempt on the system.

According to a further embodiment of the invention, the method moreover comprises a control circuit. Therein, the control circuit is adapted for changing an access to the second computer memory from a write access to a read only access. For example, the changing of the access from a write access to a read only access, may be executed on a command from the computer processing device respectively from the processing unit.

This embodiment of the invention is based on the idea that it may be advantageous to use a hardware lock for locking the computer memory in order to further hinder a hacking attempt on the system.

According to a further embodiment of the invention, the second computer memory is encapsulated from an operating system level in such a manner that the second computer memory is not directly accessible from the operating system level. Preferably the second computer memory is not visible from the operating system.

This embodiment of the invention is based on the idea that it may be advantageous to prevent a software access on the locking mechanism in order to further hinder a hacking attempt on the system.

According to a further embodiment of the invention, the second computer memory and the control circuit are both arranged on a same hardware unit.

For example, the second computer memory may comprise the control circuit.

This embodiment of the invention is based on the idea that it may be advantageous to integrate the locking mechanism together with the respective computer memory. This may increase the processing speed. This may also reduce the production cost. This may lead to a higher reliability of the hardware device.

According to a further embodiment of the invention, the second computer memory and the processing unit are both arranged on a same hardware unit.

Therefore, also the control circuit may be arranged on the same hardware unit.

For example, the second computer memory and the control circuit may be arranged together on a same integrated circuit.

For example, the second computer memory, the control circuit and the processing unit may be arranged together on a same integrated circuit.

This embodiment of the invention is based on the idea that it may be advantageous to integrate the processing unit together with the respective computer memory. This may increase the processing speed. This may also reduce the production cost. This may lead to a higher reliability of the hardware device.

According to a further embodiment of the invention, the first computer memory is adapted for allowing a random access to the first computer memory.

This embodiment of the invention is based on the idea that it may be advantageous to use a common computer memory as the first memory in order to reduce production costs.

According to a further embodiment of the invention, the second computer memory differs from the first computer memory in at least one physical characteristic concerning a storage characteristics.

This embodiment of the invention is based on the idea that it may be advantageous to use a different kind of memory type for the second memory, in order to further hinder a hacking attempt on the system.

Thus, the first computer memory stores Input and Output Parameters to the function, while the second computer memory stores the return address of the function.

The return address shall be only written to the second memory after execution of specific instructions such as CALL and not by means of instructions such as PUSH or MOV. This means the second computer memory is only writable by CALL or such privileged instruction and not by others. And hence, to the caller this second computer memory is invisible or read-only, thus not writable at all.

Moreover, the location where the code respectively the instructions are stored may also be accessible as read-only, otherwise a hacker can for example write a CALL instruction to the code memory and go where he wants to.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The illustration in the drawing is schematically. It is noted that in different figures, similar or identical elements or features are provided with the same reference signs or with reference signs, which are different from the corresponding reference signs only within the first digit. In order to avoid unnecessary repetitions, elements or features, which have already been elucidated with respect to a previously described embodiment, are not elucidated again at a later position of the description.

The following figures shall assist in a deeper understanding of the claimed invention. Therein the figures show exemplary:
Fig. 1 a schematical illustration of a proposed method according to an exemplary embodiment of the invention;
Fig. 2 a schematical illustration of a proposed device according to a further exemplary embodiment of the invention;
Fig. 3 a schematical illustration of a proposed device according to a further exemplary embodiment of the invention; and
Fig. 4 a schematical illustration of a proposed vehicle according to a further exemplary embodiment of the invention.

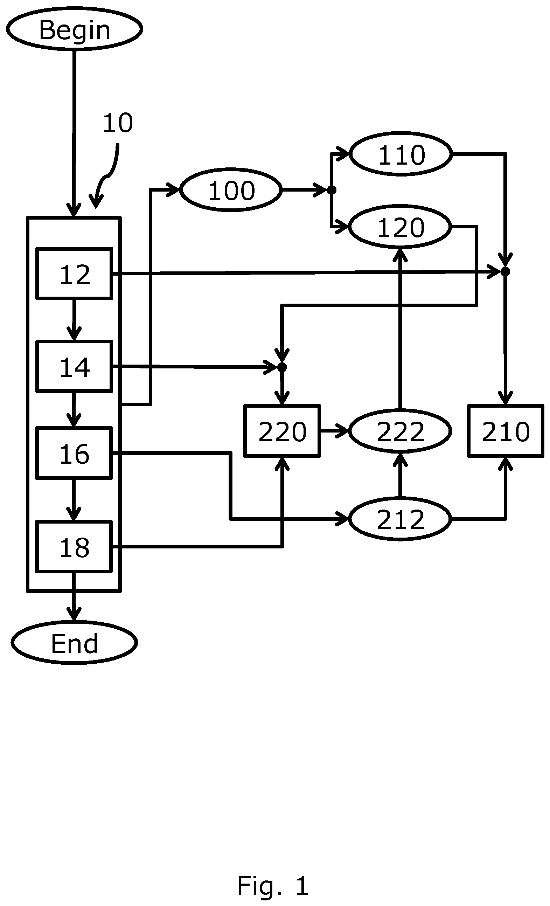

Fig. 1 shows a schematical illustration of a proposed method according to an exemplary embodiment of the invention.

Therein, Fig. 1 shows a Method for avoiding a return oriented programming attempt on a computer 300 (not illustrated in Fig. 1), the method comprising: Initial processing 10 of a set of instructions 100. Therein, the set of instructions 100 comprises a first kind of instructions 110 and a second kind of instructions 120. And the initial processing 10 of the set of instructions 100 comprises: storing 12 at least a part of each first kind of instruction 110 within the set of instructions 100 into a first computer memory 210. Storing 14 at least a part of each second kind of instruction 120 within the set of instructions 100 into a second computer memory 220. Storing 16 a storing reference 212 into the first computer memory 210, for each stored 14 second kind of instruction 120 within the second computer memory 220. Therein, each respective storing reference 212 indicates a storing-address 222 of each respective stored 14 second kind of instruction 120 within the second computer memory 220. And locking 18 the second computer memory 220, for disallowing a write-access to the second computer memory 220, after a termination of the initial processing 10 of the set of instructions 100.

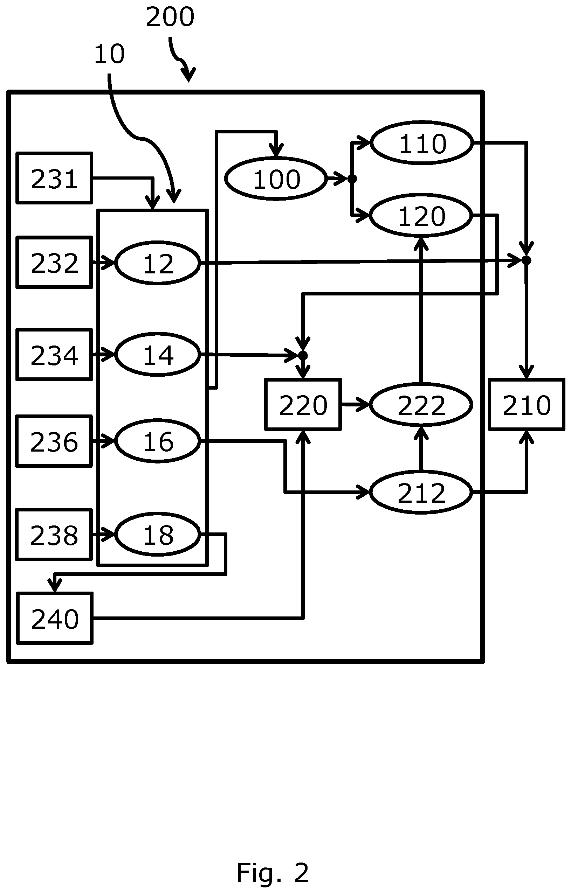

Fig. 2 shows a schematical illustration of a proposed device according to a further exemplary embodiment of the invention.

Fig. 2 shows a computer processing device 200, comprising: A second computer memory 220 and a processing unit 230. Therein, the processing unit 230 comprises: An initial processing means 231, for initial processing 10 of a set of instructions 100. Therein, the set of instructions 100 comprises a first kind of instructions 110 and a second kind of instructions 120. A first storing means 232, for storing 12 at least a part of each first kind of instruction 110 within the set of instructions 100 into a first computer memory 210. A second storing means 234, for storing 14 at least a part of each second kind of instruction 120 within the set of instructions 100 into the second computer memory 220. A third storing means 236, for storing 16 a storing reference 212 into the first computer memory 210, for each stored 14 second kind of instruction 120 within the second computer memory 220. Therein, each respective storing reference 212 indicates a storing-address 222 of each respective stored 14 second kind of instruction 120 within the second computer memory 220. And a locking means 238, for locking 18 the second computer memory 220, for disallowing a write-access to the second computer memory 220, after a termination of the initial processing 10 of the set of instructions 100. And therein, the computer processing device 200 is adapted for executing a method according to the invention.

Moreover, the computer processing device 200 comprises a control circuit 240. Therein, the control circuit 240 is adapted for changing an access to the second storage 220 from a write access to a read only access. Thus, the locking means 238 may send a locking command 18 to the control circuit 240, in order to disallow a write-access to the second computer memory 220.

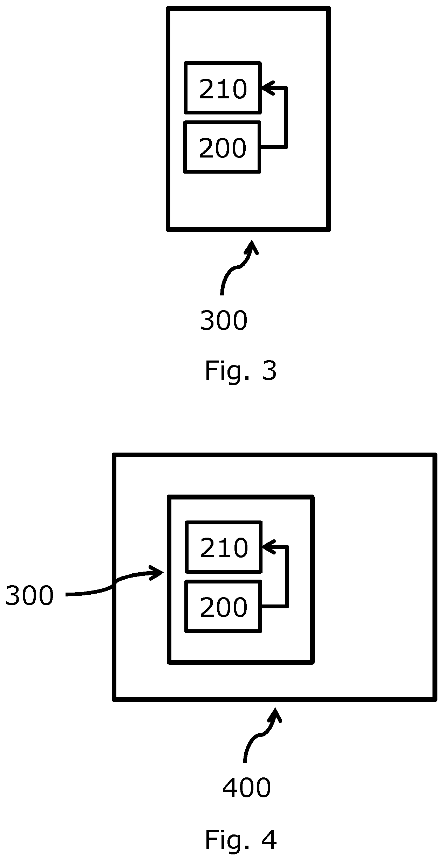

Fig. 3 shows a schematical illustration of a proposed device according to a further exemplary embodiment of the invention.

Fig. 3 shows a computer 300, comprising a first computer memory 210 and a computer processing device 200 according to the invention. Therein, the first computer memory 210 is adapted for allowing a random access to the first computer memory 210. And the second computer memory 220 differs from the first computer memory 210 in at least one physical characteristic concerning a storage characteristics.

Fig. 4 shows a schematical illustration of a proposed vehicle according to a further exemplary embodiment of the invention.

Fig. 4 shows a Vehicle 400 comprising a computer 300 according to the invention.

In order to recapitulate the above described embodiments of the present invention one can state:
The claimed invention allows for providing a special kind of memory, similar to a Random Access Memory (RAM), for storing all return addresses.

This may be called a Return Address Table (RAT). Furthermore, there may be provided a RAT pointer just like the stack pointer and always point to the top of the RAT. To prevent the RAT from being written to, it has to be an array of Special Function Registers (SFRs). These SFRs can only be read not written by simply writing to it using a direct/indirect addressing mode instruction. The Array of SFR may be an essentially Read-only Volatile Register bank. This RAT may only be written programmatically. This means these are hardwired registers, which can be written with the execution of instructions such as for example CALL. So, when the CALL is executed, the register is written with the Return Address at the last address (Last in First Out as Stack). To push or simply to write the register shall not work. They should work similar to an ADC Conversion Result register, where the ADC conversion result is available once the conversion is done and can only be read and not written by software. After the RET instruction is performed, the program implementation may continue at the caller. Consequentially a hacker cannot use the ROP, because he cannot write into the return address table. The difference to State of the Art methods is, that the method according to the invention involves a processor architecture modification. If such a hardware mechanism shall be hacked, the corresponding code needs to be executed from stack, which is prohibited by a N/X or W/X bit. If the Code shall be modified from the program memory itself, this will also be not possible as the program memory is marked as READ/EXECUTE ONLY.

### List of reference signs

- 10: initial processing of a set of instructions
- 12: storing at least a part of each first kind of instruction
- 14: storing at least a part of each second kind of instruction
- 16: storing a storing reference
- 18: locking the second computer memory
- 100: set of instructions
- 110: first kind of instructions
- 120: second kind of instructions
- 200: computer processing device
- 210: first computer memory
- 212: storing reference
- 220: second computer memory
- 222: storing-address
- 230: processing unit
- 231: initial processing means
- 232: first storing means
- 234: second storing means
- 236: third storing means
- 238: locking means
- 240: control circuit of the second computer memory

## Claims

1. Method for avoiding a return oriented programming attempt on a computer (300), the method comprising:
- Initial processing (10) of a set of instructions (100), wherein the set of instructions (100) comprises machine code, and wherein the set of instructions (100) comprises a first kind of instructions (110) comprising program instructions and a second kind of instructions (120) comprising a return address of the respective first kind of instructions (110), and wherein the initial processing (10) of the set of instructions (100) comprises:
- Storing (12) at least a part of each first kind of instruction (110) within the set of instructions (100) into a first computer memory (210),
- Storing (14) at least a part of each second kind of instruction (120) within the set of instructions (100) into a second computer memory (220), the second computer memory beeing a dedicated memory, for only storing return addresses,
- Storing (16) a storing reference (212) into the first computer memory (210), for each stored (14) second kind of instruction (120) within the second computer memory (220), wherein each respective storing reference (212) indicates a storing-address (222) of each respective stored (14) second kind of instruction (120) within the second computer memory (220), and
- Locking (18) the second computer memory (220), for disallowing a write-access to the second computer memory (220), after a termination of the initial processing (10) of the set of instructions (100), wherein the locking (18) of the second computer memory (220) can only be lifted by interrupting an electrical power-supply to the second computer memory (220) for a certain period of time, wherein after this certain period of time without electrical power-supply, the at least part of each second kind of instruction (120) stored within the second computer memory (220) is erased.

2. Method as set forth in claim 1, wherein
locking (18) the second computer memory (220) comprises sending a read-only-allowance-command to a control circuit (240) of the second computer memory (220).

3. Method as set forth in claim 1 or 2, wherein
initial processing (10) of the set of instructions (100) comprises processing each instruction of the set of instructions (100) in a first-come-first-serve modality.

4. Method as set forth in claim 3, wherein
storing (16) the respective storing reference (212) into the first computer memory (210) is carried out at a time the respective second kind of instruction (120) is processed.

5. Method as set forth in any of the preceding claims, wherein
the first computer memory (110) and/or the second computer memory (120) is accessed in a first-in-first-out modality.

6. Method as set forth in any of the preceding claims, wherein
the set of instructions (100) is marked as return-oriented-programming-safe.

7. Method as set forth in any of the preceding claims, wherein
initial processing (10) of the set of instructions (100) is carried out on an operating-system-level.

8. Method as set forth in any of the preceding claims, wherein
the set of instructions (100) is part of a computer program.

9. Computer processing device (200), comprising:
- A second computer memory (220), and
- A processing unit (230), wherein
the processing unit (230) comprises:
- An initial processing means (231), for initial processing (10) of a set of instructions (100), wherein the set of instructions (100) comprises machine code, and wherein the set of instructions (100) comprises a first kind of instructions (110) comprising program instructions and a second kind of instructions (120) comprising a return address of the respective first kind of instructions (110),
- A first storing means (232), for storing (12) at least a part of each first kind of instruction (110) within the set of instructions (100) into a first computer memory (210),
- A second storing means (234), for storing (14) at least a part of each second kind of instruction (120) within the set of instructions (100) into the second computer memory (220), wherein the second computer memory is a dedicated memory, for only storing return addresses,
- A third storing means (236), for storing (16) a storing reference (212) into the first computer memory (210), for each stored (14) second kind of instruction (120) within the second computer memory (220), wherein each respective storing reference (212) indicates a storing-address (222) of each respective stored (14) second kind of instruction (120) within the second computer memory (220), and
- A locking means (238), for locking (18) the second computer memory (220), for disallowing a write-access to the second computer memory (220), after a termination of the initial processing (10) of the set of instructions (100), wherein the locking (18) of the second computer memory (220) can only be lifted by interrupting an electrical power-supply to the second computer memory (220) for a certain period of time, wherein after this certain period of time without electrical power-supply, the at least part of each second kind of instruction (120) stored within the second computer memory (220) is erased, and wherein
the computer processing device (200) is adapted for executing a method as of any of the preceding claims.

10. Computer processing device (200) as set forth in claim 9, moreover comprising:
- A control circuit (240), wherein the control circuit (240) is adapted for changing an access to the second storage (220) from a write-access to a read-only-access.

11. Computer processing device (200) as set forth in claim 9 or 10, wherein
the second computer memory (220) is encapsulated from an operating-system-level in such a manner that the second computer memory (220) is not directly accessible from the operating--system--level.

12. Computer processing device (200) as set forth in any of the preceding claims 9 to 11, wherein
the second computer memory (220) and the control circuit (240) are both arranged on a same hardware unit.

13. Computer processing device (200) as set forth in any of the preceding claims 9 to 12, wherein
the second computer memory (220) and the processing unit (230) are both arranged on a same hardware unit.

14. Computer (300), comprising
A first computer memory (210), and
A computer processing device (200) as of any of claims 9 to 13.

15. Computer (300) as set forth in claim 14, wherein
the first computer memory (210) is adapted for allowing a random access to the first computer memory (210).

16. Computer (300) as set forth in claim 14 or 15, wherein the second computer memory (220) differs from the first computer memory (210) in at least one physical characteristic concerning a storage characteristic.

17. Vehicle (400) comprising a computer (300) as of any of claims 14 to 16.

## Patentansprüche

1. Verfahren zum Vermeiden eines rückgabeorientierten Programmierungsansatzes in einem Computer (300), wobei das Verfahren Folgendes umfasst:
- eine anfängliche Verarbeitung (10) eines Befehlssatzes (100), wobei der Befehlssatz (100) Maschinencode umfasst, der Befehlssatz (100) eine erste Befehlsart (110), die Programmbefehle umfasst, und eine zweite Befehlsart (120), die eine Rückgabeadresse der jeweiligen ersten Befehlsart (110) umfasst, umfasst und die anfängliche Verarbeitung (10) des Befehlssatzes (100) Folgendes umfasst:
- Speichern (12) mindestens eines Teils jeder ersten Befehlsart (110) im Befehlssatz (100) in einen ersten Computerspeicher (210),
- Speichern (14) mindestens eines Teils jeder zweiten Befehlsart (120) im Befehlssatz (100) in einen zweiten Computerspeicher (220), wobei der zweite Computerspeicher ein fest zugeordneter Speicher lediglich für Speicherrückgabeadressen ist,
- Speichern (16) eines Speicherbezugs (212) in den ersten Computerspeicher (210) für jede gespeicherte (14) zweite Befehlsart (120) im zweiten Computerspeicher (220), wobei jeder jeweilige Speicherbezug (212) eine Speicheradresse (222) jeder jeweiligen gespeicherten (14) zweiten Befehlsart (120) im zweiten Computerspeicher (220) angibt, und
- Sperren (18) des zweiten Computerspeichers (220), um keinen Schreibzugriff zum zweiten Computerspeicher (220) zu ermöglichen, nach einer Beendigung der anfänglichen Verarbeitung (10) des Befehlssatzes (100), wobei das Sperren (18) des zweiten Computerspeichers (220) lediglich durch Unterbrechen einer elektrischen Stromversorgung zum zweiten Computerspeicher (220) für einen bestimmten Zeitraum aufgehoben werden kann und nach diesem bestimmten Zeitraum ohne elektrische Stromversorgung der mindestens eine Teil jeder zweiten Befehlsart (120), der im zweiten Computerspeicher (220) gespeichert ist, gelöscht wird.

2. Verfahren nach Anspruch 1, wobei
das Sperren (18) des zweiten Computerspeichers (220) ein Senden einer Schreibschutzanweisung zu einer Steuerschaltung (240) des zweiten Computerspeichers (220) umfasst.

3. Verfahren nach Anspruch 1 oder 2, wobei
die anfängliche Verarbeitung (10) des Befehlssatzes (100) eine Verarbeitung jedes Befehls des Befehlssatzes (100) in einer First-Come-First-Serve-Modalität umfasst.

4. Verfahren nach Anspruch 3, wobei
das Speichern (16) des jeweiligen Speicherbezugs (212) in den ersten Computerspeicher (210) zu einer Zeit ausgeführt wird, zu der die jeweilige zweite Befehlsart (120) verarbeitet wird.

5. Verfahren nach einem der vorhergehenden Ansprüche, wobei
auf den ersten Computerspeicher (110) und/oder den zweiten Computerspeicher (120) in einer First-In-First-Out-Modalität zugegriffen wird.

6. Verfahren nach einem der vorhergehenden Ansprüche, wobei
der Befehlssatz (100) als für eine rückgabeorientierte Programmierung sicher markiert ist.

7. Verfahren nach einem der vorhergehenden Ansprüche, wobei
die anfängliche Verarbeitung (10) des Befehlssatzes (100) auf einem Betriebssystemniveau ausgeführt wird.

8. Verfahren nach einem der vorhergehenden Ansprüche, wobei
der Befehlssatz (100) Teil eines Computerprogramms ist.

9. Computerverarbeitungsvorrichtung (200), die Folgendes umfasst:
- einen zweiten Computerspeicher (220) und
- eine Verarbeitungseinheit (230), wobei
die Verarbeitungseinheit (230) Folgendes umfasst:
- ein anfängliches Verarbeitungsmittel (231) zur anfänglichen Verarbeitung (10) eines Befehlssatzes (100), wobei der Befehlssatz (100) Maschinencode umfasst und der Befehlssatz (100) eine erste Befehlsart (110), die Programmbefehle umfasst, und eine zweite Befehlsart (120), die eine Rückgabeadresse der jeweiligen ersten Befehlsart (110) umfasst, umfasst,
- ein erstes Speichermittel (232) zum Speichern (12) mindestens eines Teils jeder ersten Befehlsart (110) in dem Befehlssatz (100) in einen ersten Computerspeicher (210),
- ein zweites Speichermittel (234) zum Speichern (14) mindestens eines Teils jeder zweiten Befehlsart (120) in dem Befehlssatz (100) in den zweiten Computerspeicher (220), wobei der zweite Computerspeicher ein fest zugeordneter Speicher lediglich für Speicherrückgabeadressen ist,
- ein drittes Speichermittel (236) zum Speichern (16) eines Speicherbezugs (212) in den ersten Computerspeicher (210) für jede gespeicherte (14) zweite Befehlsart (120) im zweiten Computerspeicher (220), wobei jeder jeweilige Speicherbezug (212) eine Speicheradresse (222) jeder jeweiligen gespeicherten (14) zweiten Befehlsart (120) im zweiten Computerspeicher (220) angibt, und
- ein Sperrmittel (238) zum Sperren (18) des zweiten Computerspeichers (220), um keinen Schreibzugriff zum zweiten Computerspeicher (220) zu ermöglichen, nach einer Beendigung der anfänglichen Verarbeitung (10) des Befehlssatzes (100), wobei das Sperren (18) des zweiten Computerspeichers (220) lediglich durch Unterbrechen einer elektrischen Stromversorgung zum zweiten Computerspeicher (220) für einen bestimmten Zeitraum aufgehoben werden kann und nach diesem bestimmten Zeitraum ohne elektrische Stromversorgung der mindestens eine Teil jeder zweiten Befehlsart (120), der im zweiten Computerspeicher (220) gespeichert ist, gelöscht wird, wobei
die Computerverarbeitungsvorrichtung (200) zum Ausführen eines Verfahrens nach einem der vorhergehenden Ansprüche ausgelegt ist.

10. Computerverarbeitungsvorrichtung (200) nach Anspruch 9, die außerdem Folgendes umfasst:
- eine Steuerschaltung (240), wobei die Steuerschaltung (240) zum Ändern eines Zugriffs auf den zweiten Speicher (220) von einem Schreibzugriff zu einem reinen Lesezugriff ausgelegt ist.

11. Computerverarbeitungsvorrichtung (200) nach Anspruch 9 oder 10, wobei
der zweite Computerspeicher (220) von einem Betriebssystemniveau gekapselt ist, derart, dass der zweite Computerspeicher (220) vom Betriebssystemniveau nicht direkt zugänglich ist.

12. Computerverarbeitungsvorrichtung (200) nach einem der vorhergehenden Ansprüche 9 bis 11, wobei
der zweite Computerspeicher (220) und die Steuerschaltung (240) beide in derselben Hardware-Einheit angeordnet sind.

13. Computerverarbeitungsvorrichtung (200) nach einem der vorhergehenden Ansprüche 9 bis 12, wobei
der zweite Computerspeicher (220) und die Verarbeitungseinheit (230) beide in derselben Hardware-Einheit angeordnet sind.

14. Computer (300), der Folgendes umfasst:
einen ersten Computerspeicher (210) und
eine Computerverarbeitungsvorrichtung (200) nach einem der Ansprüche 9 bis 13.

15. Computer (300) nach Anspruch 14, wobei
der erste Computerspeicher (210) ausgelegt ist zum Ermöglichen eines wahlfreien Zugriffs auf den ersten Computerspeicher (210).

16. Computer (300) nach Anspruch 14 oder 15, wobei
der zweite Computerspeicher (220) sich vom ersten Computerspeicher (210) in mindestens einer physischen Eigenschaft unterscheidet, die eine Speichercharakteristik betrifft.

17. Fahrzeug (400), das einen Computer (300) nach einem der Ansprüche 14 bis 16 umfasst.

## Revendications

1. Procédé pour éviter une tentative de programmation orientée retour sur un ordinateur (300), le procédé comprenant les étapes suivantes :
- effectuer un traitement initial (10) d'un ensemble d'instructions (100), où l'ensemble d'instructions (100) comprend un code machine, et où l'ensemble d'instructions (100) comprend un premier type d'instructions (110) comprenant des instructions de programme et un deuxième type d'instructions (120) comprenant une adresse de retour du premier type d'instructions (110) respectif, et où le traitement initial (10) de l'ensemble d'instructions (100) comprend les étapes suivantes :
- stocker (12) au moins une partie de chaque premier type d'instruction (110) dans l'ensemble d'instructions (100) dans une première mémoire d'ordinateur (210),
- stocker (14) au moins une partie de chaque deuxième type d'instruction (120) dans l'ensemble d'instructions (100) dans une deuxième mémoire d'ordinateur (220), la deuxième mémoire d'ordinateur étant une mémoire dédiée, destinée uniquement à stocker des adresses de retour,
- stocker (16) une référence de stockage (212) dans la première mémoire d'ordinateur (210), pour chaque deuxième type d'instruction (120) stocké (14) dans la deuxième mémoire d'ordinateur (220), chaque référence de stockage respective (212) indiquant une adresse de stockage (222) de chaque deuxième type d'instruction (120) stocké (14) dans la deuxième mémoire d'ordinateur (220), et
- verrouiller (18) la deuxième mémoire d'ordinateur (220) pour empêcher un accès en écriture à la deuxième mémoire d'ordinateur (220), après la fin du traitement initial (10) de l'ensemble d'instructions (100), où le verrouillage (18) de la deuxième mémoire d'ordinateur (220) ne peut être levé qu'en interrompant l'alimentation électrique de la deuxième mémoire d'ordinateur (220) pendant un certain temps, où, après ce temps sans alimentation électrique, au moins une partie de chaque deuxième type d'instruction (120) stocké dans la deuxième mémoire d'ordinateur (220) est effacée.

2. Procédé tel que décrit dans la revendication 1, dans lequel
le verrouillage (18) de la deuxième mémoire d'ordinateur (220) comprend l'envoi d'une commande d'autorisation de lecture seule à un circuit de commande (240) de la deuxième mémoire d'ordinateur (220).

3. Procédé tel que décrit dans la revendication 1 ou la revendication 2, dans lequel
le traitement initial (10) de l'ensemble d'instructions (100) comprend le traitement de chaque instruction de l'ensemble d'instructions (100) selon une modalité « premier arrivé, premier servi ».

4. Procédé tel que décrit dans la revendication 3, dans lequel
le stockage (16) de la référence de stockage respective (212) dans la première mémoire d'ordinateur (210) est effectué au moment où le deuxième type d'instruction respectif (120) est traité.

5. Procédé tel que décrit dans l'une quelconque des revendications précédentes, dans lequel
la première mémoire d'ordinateur (110) et/ou la deuxième mémoire d'ordinateur (120) est accessible selon une modalité « premier entré, premier sorti ».

6. Procédé tel que décrit dans l'une quelconque des revendications précédentes, dans lequel
l'ensemble d'instructions (100) est marqué comme étant sécurisé vis-à-vis de la programmation orientée retour.

7. Procédé tel que décrit dans l'une quelconque des revendications précédentes, dans lequel
le traitement initial (10) de l'ensemble d'instructions (100) est effectué au niveau du système d'exploitation.

8. Procédé tel que décrit dans l'une quelconque des revendications précédentes, dans lequel
l'ensemble d'instructions (100) fait partie d'un programme informatique.

9. Dispositif de traitement informatique (200), comprenant :
- une deuxième mémoire informatique (220), et
- une unité de traitement (230), où
l'unité de traitement (230) comprend :
- un moyen de traitement initial (231), pour le traitement initial (10) d'un ensemble d'instructions (100), où l'ensemble d'instructions (100) comprend un code machine, et où l'ensemble d'instructions (100) comprend un premier type d'instructions (110) comprenant des instructions de programme et un deuxième type d'instructions (120) comprenant une adresse de retour du premier type d'instructions (110) respectif,
- un premier moyen de stockage (232), pour stocker (12) au moins une partie de chaque premier type d'instruction (110) dans l'ensemble d'instructions (100) dans une première mémoire d'ordinateur (210),
- un deuxième moyen de stockage (234), pour stocker (14) au moins une partie de chaque deuxième type d'instruction (120) dans l'ensemble d'instructions (100) dans la deuxième mémoire d'ordinateur (220), où la deuxième mémoire d'ordinateur est une mémoire dédiée, destinée uniquement à stocker des adresses de retour,
- un troisième moyen de stockage (236), pour stocker (16) une référence de stockage (212) dans la première mémoire d'ordinateur (210), pour chaque deuxième type d'instruction (120) stocké (14) dans la deuxième mémoire d'ordinateur (220), où chaque référence de stockage respective (212) indique une adresse de stockage (222) de chaque deuxième type d'instruction (120) stocké (14) respectif dans la deuxième mémoire d'ordinateur (220), et
- un moyen de verrouillage (238) pour verrouiller (18) la deuxième mémoire d'ordinateur (220) pour empêcher un accès en écriture à la deuxième mémoire d'ordinateur (220), après la fin du traitement initial (10) de l'ensemble d'instructions (100), où le verrouillage (18) de la deuxième mémoire d'ordinateur (220) ne peut être levé qu'en interrompant l'alimentation électrique de la deuxième mémoire d'ordinateur (220) pendant un certain temps, où, après ce temps sans alimentation électrique, au moins une partie de chaque deuxième type d'instruction (120) stocké dans la deuxième mémoire d'ordinateur (220) est effacée, et où
le dispositif de traitement informatique (200) est adapté pour exécuter un procédé selon l'une quelque des revendications précédentes.

10. Dispositif de traitement informatique (200) tel que décrit dans la revendication 9, comprenant en outre :
- un circuit de commande (240), le circuit de commande (240) étant adapté pour modifier un accès à la deuxième mémoire de stockage (220) d'un accès en écriture à un accès en lecture seule.

11. Dispositif de traitement informatique (200) tel que décrit dans la revendication 9 ou la revendication 10, dans lequel
la deuxième mémoire d'ordinateur (220) est encapsulée à partir d'un niveau de système d'exploitation de telle manière que la deuxième mémoire d'ordinateur (220) n'est pas directement accessible à partir du niveau de système d'exploitation.

12. Dispositif de traitement informatique (200) tel que décrit dans l'une quelconque des revendications précédentes 9 à 11, dans lequel
la deuxième mémoire d'ordinateur (220) et le circuit de commande (240) sont tous deux disposés sur une même unité matérielle.

13. Dispositif de traitement informatique (200) tel que décrit dans l'une quelconque des revendications précédentes 9 à 12, dans lequel
la deuxième mémoire d'ordinateur (220) et l'unité de traitement (230) sont toutes deux disposées sur une même unité matérielle.

14. Ordinateur (300), comprenant
une première mémoire d'ordinateur (210), et
un dispositif de traitement informatique (200) selon l'une quelconque des revendications 9 à 13.

15. Ordinateur (300) tel que décrit dans la revendication 14, dans lequel
la première mémoire d'ordinateur (210) est adaptée pour permettre un accès aléatoire à la première mémoire d'ordinateur (210).

16. Ordinateur (300) tel que décrit dans la revendication 14 ou la revendication 15, dans lequel la deuxième mémoire d'ordinateur (220) diffère de la première mémoire d'ordinateur (210) par au moins une caractéristique physique concernant une caractéristique de stockage.

17. Véhicule (400) comprenant un ordinateur (300) selon l'une quelconque des revendications 14 à 16.
